# EUROPEAN PATENT SPECIFICATION

(11) **EP 4 711 187 B1**
(45) Date of publication and mention of the grant of the patent: **25.11.2026**
(21) Application number: 25194613.3
(22) Date of filing: 07.08.2025
(51) Int. Cl.: B60L 50/64, H01M 10/613, H01M 10/617, H01M 10/647, H01M 10/6568

(54) **ELECTRIC BATTERY PACK WITH IMPROVED SYSTEM FOR DISTRIBUTING A TEMPERATURE-REGULATING LIQUID**
ELEKTRISCHES BATTERIEPACK MIT VERBESSERTEM SYSTEM ZUR VERTEILUNG EINER TEMPERATURREGULIERENDEN FLÜSSIGKEIT
BLOC-BATTERIE ÉLECTRIQUE À SYSTÈME AMÉLIORÉ DE DISTRIBUTION D'UN LIQUIDE DE RÉGULATION DE TEMPÉRATURE

(30) Priority: 12.09.2024 IT 202400020353
(43) Date of publication of application: 18.03.2026
(73) Proprietor: C.R.F. Società Consortile per Azioni, 10043 Orbassano (Torino) (IT)
(72) Inventor: GARGANO, Marcello, I-10043 Orbassano (Torino) (IT); RICCO, Raffaele, I-10043 Orbassano (Torino) (IT); DE MICHELE, Onofrio, I-10043 Orbassano (Torino) (IT); VURRO, Luca, I-10043 Orbassano (Torino) (IT); ROSSI, Dario, I-10043 Orbassano (Torino) (IT); LORUSSO, Eligio, I-10043 Orbassano (Torino) (IT)
(74) Representative: Buzzi, Notaro & Antonielli d'Oulx S.p.A.

(56) References cited:
- EP-A1- 4 047 733
- WO-A1-2024/062012
- CN-A- 110 783 660
- CN-U- 221 668 927
- US-A1- 2022 302 525

## Description

### Field of the invention

The present invention relates to the field of electric batteries, particularly to electric batteries for powering traction electric motors of electric or hybrid vehicles.

More specifically, the invention relates to battery packs of the type wherein battery cells are in direct contact with a flow of a temperature-regulating liquid, typically a dielectric oil, which flows through the battery pack to maintain the battery cells within a determined temperature range, thereby ensuring correct and safe operation of the battery pack under all operational and environmental conditions.

### Background of the invention

The Applicant has previously proposed various solutions in the aforementioned field. See, for example, the Italian patent applications 102023000022692, 102023000022698, 102023000022704, 102023000025884, 102024000002776, 102024000002779, 102024000004423, 102024000007807, 102024000007813, 102024000007816, 102024000007828, 102024000013039, 102024000013492, 102024000014308, 102024000014314, 102024000014326, 102024000015637, 102024000016354, 102024000016933, all still not publicly available as of the priority date of the present invention.

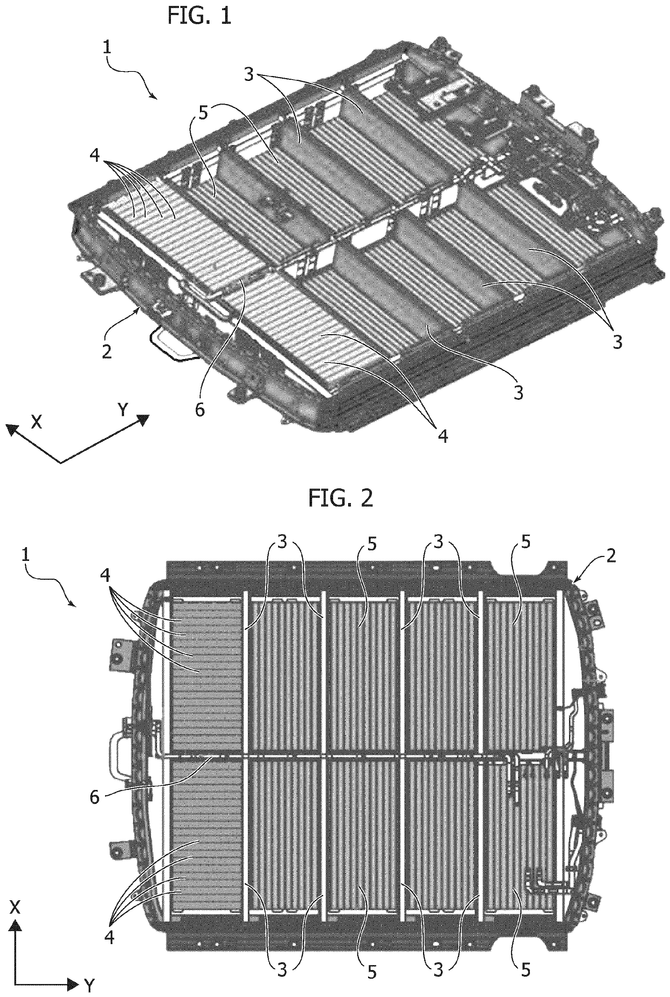

Figures 1-14 of the attached drawings show a battery pack of the type that was the subject of studies and experiments conducted by the Applicant prior to the present invention.

Figure 1 is a perspective view of a battery pack 1 with the upper part of the external casing removed. Reference numeral 2 indicates the lower container forming part of the external casing of the battery pack 1. Inside the container 2 is arranged a frame, including a plurality of partition walls 3 defining a plurality of compartments (in this example, ten compartments are provided) each intended to receive a battery group comprising a plurality of battery cells arranged side by side along a horizontal direction X and spaced apart from each other by respective spacer frames (not visible in Figure 1).

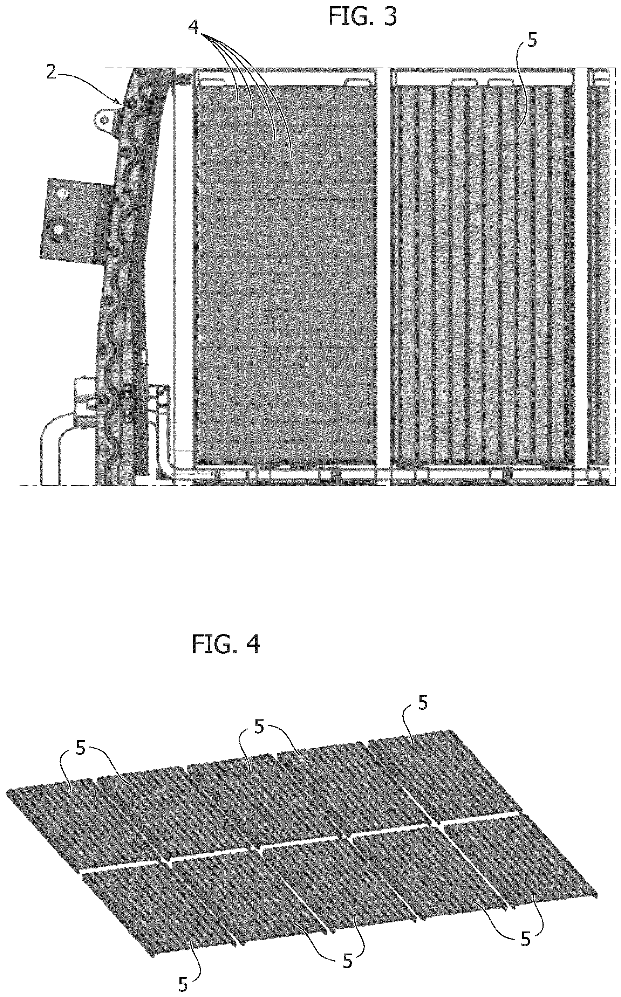

For illustration convenience, in both Figure 1 and Figure 2, which is a plan view of the battery pack of Figure 1, as well as in Figure 3, which shows an enlarged detail of Figure 2, only the cells 4 filling two of the ten compartments provided in the battery pack 1 are illustrated.

The battery pack 1 described and illustrated here uses prismatic-type battery cells 4, each having two opposite main faces arranged orthogonally to direction X, a pair of vertical end surfaces, and a pair of horizontal end surfaces.

In the example illustrated in Figures 1-3, the different groups of cells 4 are arranged in two parallel rows along a horizontal direction Y orthogonal to the horizontal direction X.

Each group of cells 4 rests on a respective lower support plate 5. Figure 4 of the attached drawings is a perspective view showing the distribution of the different lower support plates 5, on which the battery cells 4 of the different battery groups are placed. The lower support plates 5 are also visible in Figures 1 and 2, where the battery cells 4 have been removed.

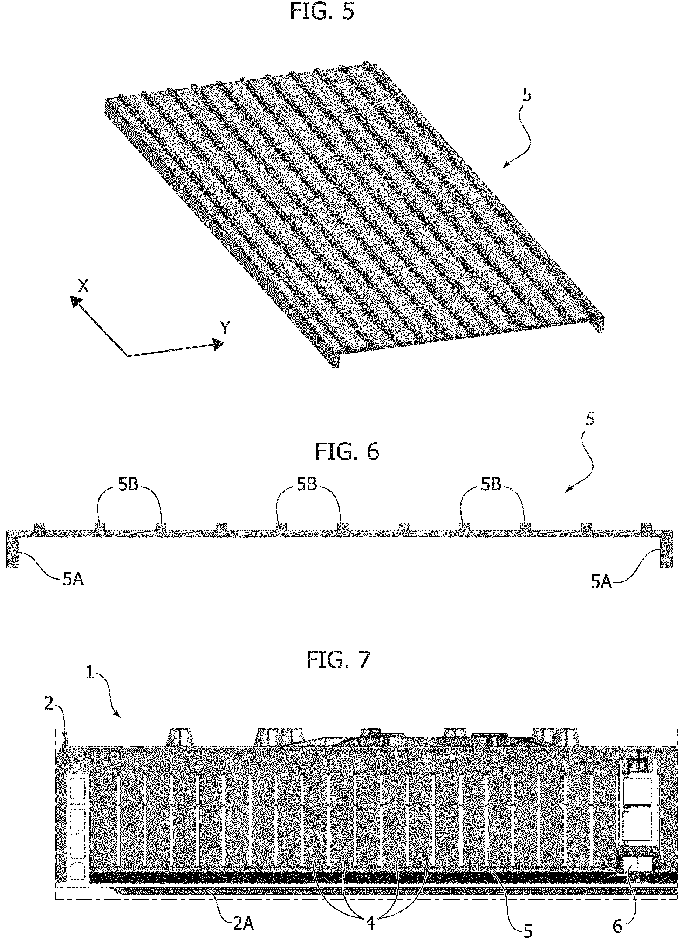

Figures 5 and 6 of the attached drawings show a perspective view and a front view of each lower support plate 5. Each plate 5 has a substantially flat configuration, with two longitudinal feet 5A resting on the bottom wall of the external casing of the battery pack, and a distribution of parallel and spaced ribs 5B extending in direction X.

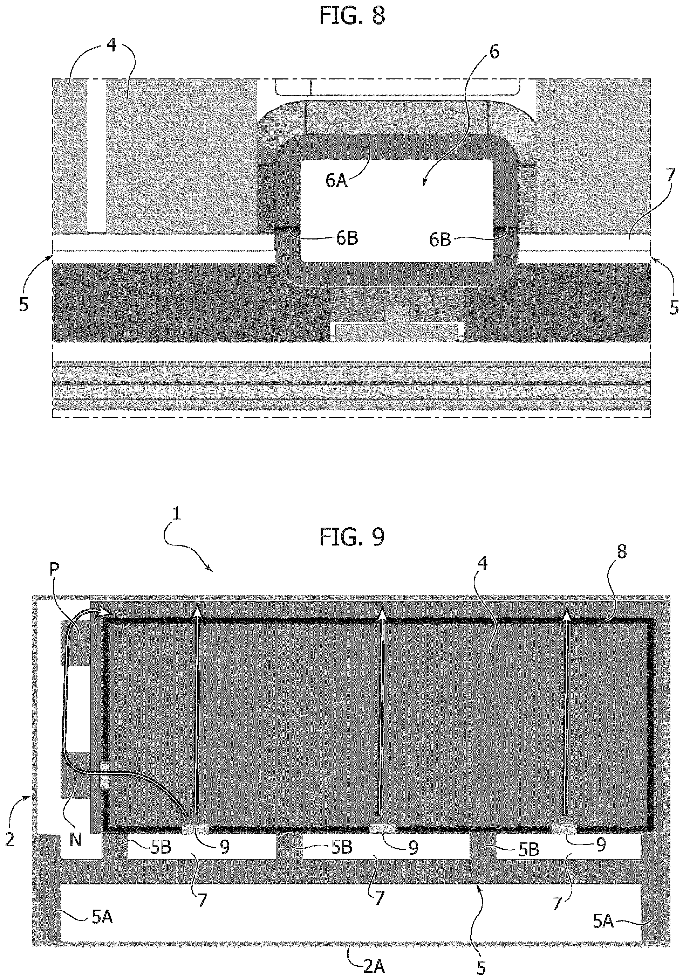

Figure 9 is a schematic and simplified cross-sectional view of a single battery group, in a plane orthogonal to direction X, showing the arrangement of the lower support plate 5 inside the casing of the battery pack 1. The feet 5A of the lower support plate 5 rest on the bottom wall 2A of the lower container 2, while the battery cells 4 rest with their lower surfaces on the ribs 5B of the plate 5. Figure 9 shows an example where the battery cells 4 are of the type having their respective positive and negative tabs P, N on a vertical end surface of the cell.

The battery pack described above is of the type including a system for distributing a temperature-regulating liquid, typically a dielectric oil, within the battery pack.

The temperature-regulating liquid distribution system includes a longitudinal channel 6 for supplying the temperature-regulating liquid, extending in direction Y. See in particular Figure 7, which is a partial cross-sectional view of the battery pack in a plane orthogonal to direction Y.

As visible in Figure 9, the battery cells 4, being supported on the ribs 5B of the respective lower support plate 5, define a plurality of transverse channels 7 extending in direction X, i.e., transversely to the longitudinal direction Y, which are delimited between the upper surface of the plate 5, the ribs 5B, and the lower surfaces of the cells 4 resting on the ribs 5B.

Figure 8 shows an enlarged detail of Figure 7. The longitudinal channel 6 for supplying the temperature-regulating liquid is defined by a tubular element 6A having a plurality of lateral openings 6B, which connect the longitudinal channel 6 with the transverse channels 7 defined between each lower support plate 5 and the cells 4 arranged above them.

Figures 7-9 also show that the cells 4 of each cell group are spaced apart from each other by spacer frames 8, each of which is substantially in the form of a peripheral frame, with a lower horizontal side, an upper horizontal side, and two vertical end sides.

The temperature-regulating liquid, which is supplied via the longitudinal feeding channel 6 into the transverse channels 7, flows into the spaces between the cells 4 of each cell group through relatively narrow apertures 9 (see Figure 9) formed in the lower side of each spacer frame 8.

The apertures 9, which connect the transverse channels 7 with the spaces between the cells 4, are configured and sized to provide a resistance to the flow sufficient to prevent the temperature-regulating liquid from flowing to a greater extent into the spaces between the cells that are closer to the longitudinal feeding channel 6.

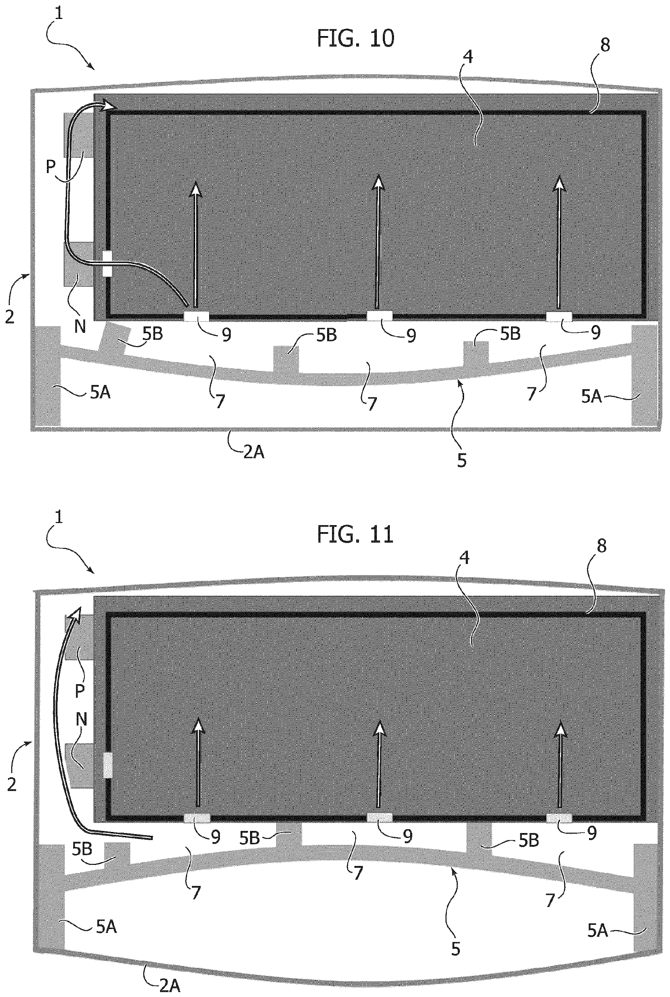

Figures 10-14 are cross-sectional views corresponding to that of Figure 9, showing a series of issues that may occur with a battery pack having the configuration described above. The provision of the narrow apertures 9 in the spacer frames 8 causes relatively high pressure to build up in the transverse channels 7, due to the flow resistance offered by the apertures 9. The overpressure can cause deformation of each lower support plate 5, as illustrated in Figure 10. Each plate 5 may bow downward, causing the ribs 5B of the plate to separate from the lower surfaces of the cells 4. Consequently, flow control through the apertures 9 is lost, and the cells 4 can no longer be thermally controlled reliably and uniformly. Part of the flow may also bypass the apertures 9 entirely. Moreover, the deformation of the lower support plate 5 induces deformations and structural stresses in the bottom and top walls of the external casing of the battery pack.

Figure 11 shows another possible critical situation, where the overpressure of the temperature-regulating liquid is transmitted into the space below the lower support plates 5, causing them to bow upward. In this case as well, flow control through the apertures 9 is completely lost, compromising the thermal regulation of the cells in the battery group.

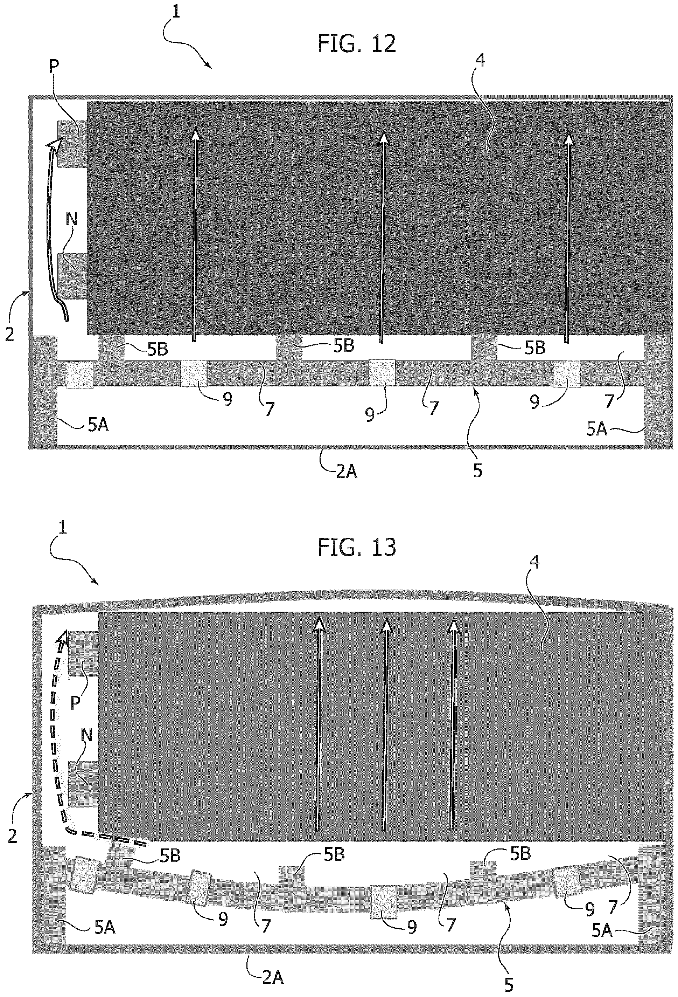

Figure 12 illustrates an alternative solution previously studied by the Applicant, which differs from that of Figure 9 in that in this case the narrow apertures 9 are formed in the wall of the lower support plate 5. Each plate 5 includes a distribution of apertures 9 along direction X, corresponding to each transverse channel 7.

In the case of the solution illustrated in Figure 12, critical situations may occur as respectively shown in Figures 13 and 14, wherein each lower support plate 5 is bowed, either downward or upward. In both situations, if the flatness of the plate is lost, the homogeneity of the temperature-regulating liquid flow controlled by the apertures 9 is no longer maintained. The flow of the temperature-regulating liquid in the spaces between the cells becomes entirely non-uniform, which compromises effective thermal regulation of the battery cells. Furthermore, the deformation of the lower support plates 5 induces structural deformations and stresses on the bottom and top walls of the external casing of the battery pack.

The present invention stems from the need to overcome the aforementioned drawbacks.

An electric battery pack having the features set forth in the preamble of claim 1 is known from document WO2024062012A1. It should be noted that, in this document, Figure 8 shows elements 28 are steel bands used as strapping around groups of battery cells and are therefore not arranged beneath the cells. As is also clearly visible in Figures 8, 9 and 10 of document WO2024062012A1, and in the corresponding portion of the description on page 12 of this document, the solution disclosed therein provides a chamber for the temperature-regulating liquid beneath each of two aligned series of cells, this chamber being laterally delimited by ribs 23 interposed between the bottom wall of the battery pack container and the lower surfaces of the cells. This document therefore describes a battery pack similar to those described above with reference to Figures 10-14 of the appended drawings.

### Object of the invention

**It** is therefore an object of the present invention to provide a battery pack of the type indicated at the beginning of the present description, comprising a distribution system for a temperature-regulating liquid, which ensures efficient thermal regulation of the battery pack under all operating conditions, particularly by maintaining substantial homogeneity in the flow of the temperature-regulating liquid through the different spaces between the cells.

A particular object of the invention is to provide a battery pack of the aforementioned type wherein undesirable deformations are not generated in the support structure of the battery cells and in the walls of the external casing of the battery pack, thereby avoiding dangerous stresses for the battery pack structure and leaks of the temperature-regulating liquid that compromise the efficiency and uniformity of the thermal regulation action across all cells of the battery pack.

Finally, a further object of the invention is to achieve the aforementioned objectives with a simple and economical construction structure.

### Summary of the invention

With the aim of achieving one or more of the aforementioned objects, the invention relates to an electric battery pack having the features indicated in claim 1.

Preferably, the relatively narrow apertures are formed in the upper wall of the lower support structure and are aligned in multiple rows parallel to said first horizontal direction, each row of apertures being in communication with a respective transverse channel.

In a preferred embodiment, each battery group in the battery pack is provided with its respective lower support structure, configured as indicated above.

In a first example, the transverse channels have an open end communicating with the longitudinal feeding channel, while in a second example, the transverse channels communicate with the longitudinal feeding channel near an end of the transverse channels, via passages formed in said upper wall of the lower support structure.

Preferably, said relatively narrow apertures are slots extending along said first horizontal direction. These slots are sufficiently extended to ensure that each of them cannot be completely obstructed by the lower surface of a battery cell due to any misalignments of the cells relative to a nominal positioning, allowed by manufacturing tolerances.

In one embodiment, each group of cells rests on a lower support structure having a monolithic structure that incorporates said lower wall, said upper wall, and the ribs extending between the lower wall and the upper wall. In another embodiment, said upper wall of the support structure consists of a separate element, rigidly connected to a second element that incorporates the lower wall and the ribs. In this embodiment, the element defining the lower wall and the ribs of the lower support structure may be integrally formed with the bottom wall of the external casing of the battery pack.

Thanks to the aforementioned features, all the drawbacks mentioned above are overcome. The transverse channels for the temperature-regulating liquid are channels with a closed cross-section, defined within a lower support structure that is much more rigid than the previously proposed solutions described above. Consequently, the lower support structure on which the cells of each battery group are supported is not subject to deformations even when subjected to overpressures. This prevents leaks and loss of control in the flow of the temperature-regulating liquid through the different spaces between the battery cells.

### Detailed description of the invention

Further features and advantages of the invention will become apparent from the following description with reference to the attached drawings, provided by way of non-limiting example, wherein:
Figures 1-14 illustrate solutions previously studied by the Applicant, which have already been described above to clarify the technical problem on which the invention is based,

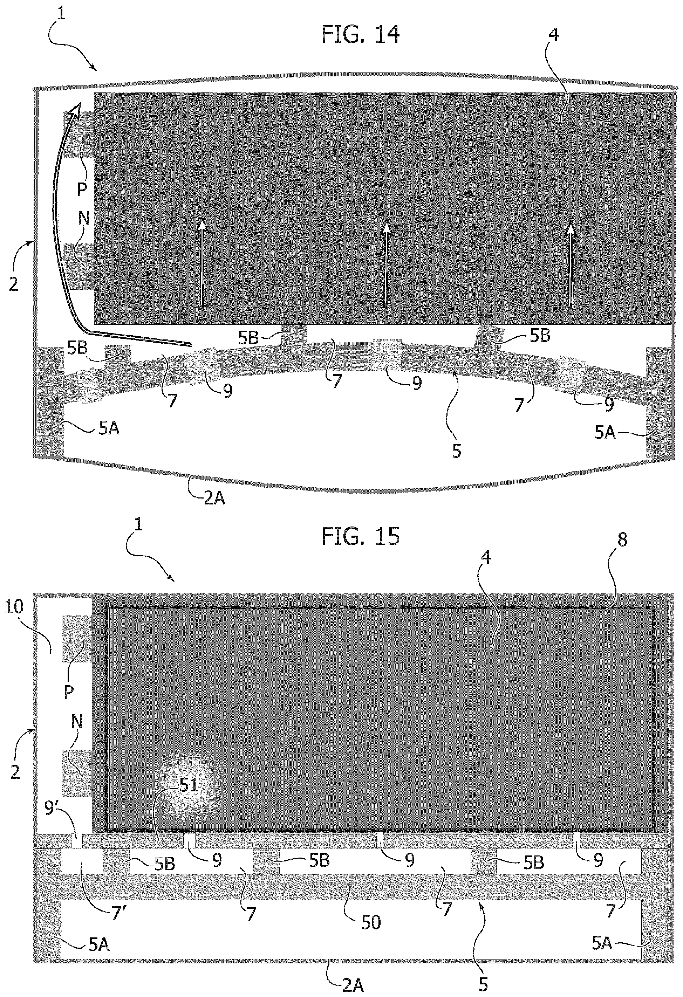

Figure 15 is a schematic cross-sectional view of a first embodiment of the battery pack according to the invention,

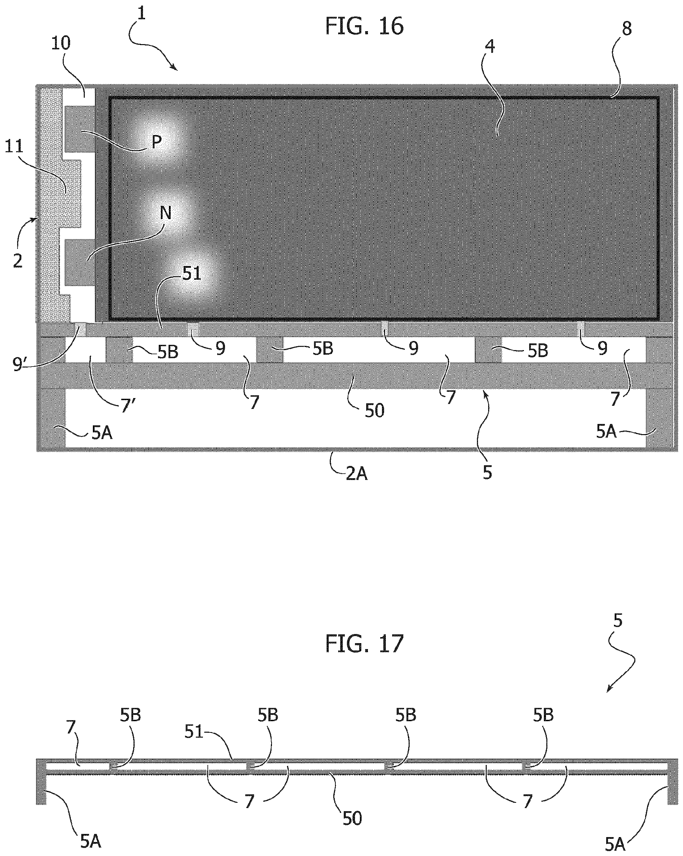

Figure 16 is a variant of Figure 15,
Figure 17 is a front view of a lower support structure forming part of the battery pack according to the invention,

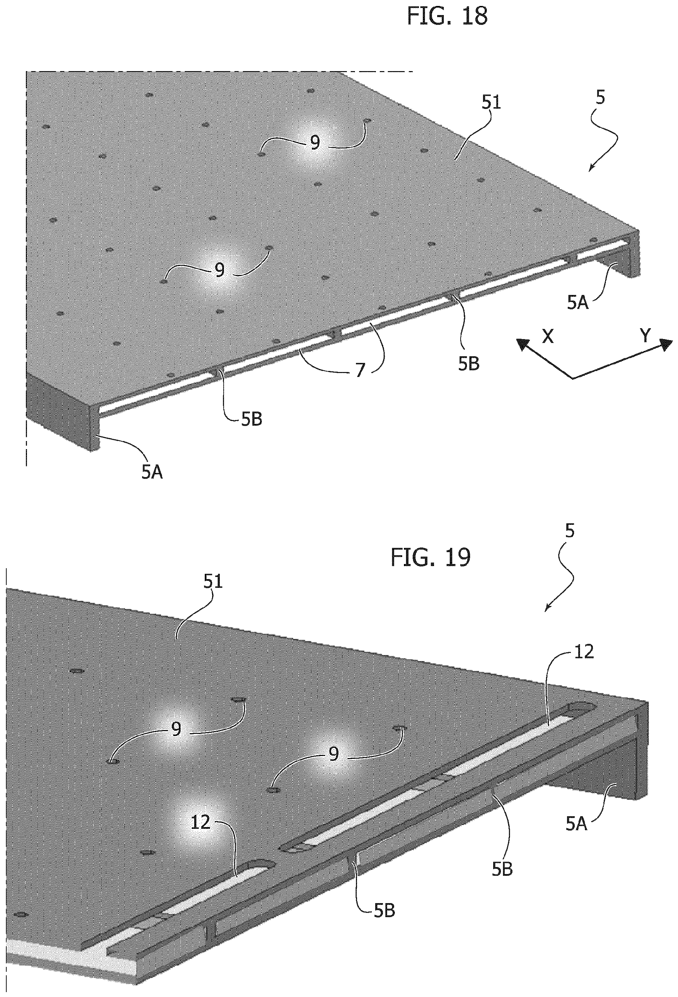

Figure 18 is a partial perspective view of the lower support structure of Figure 17,
Figure 19 illustrates a variant of Figure 18,

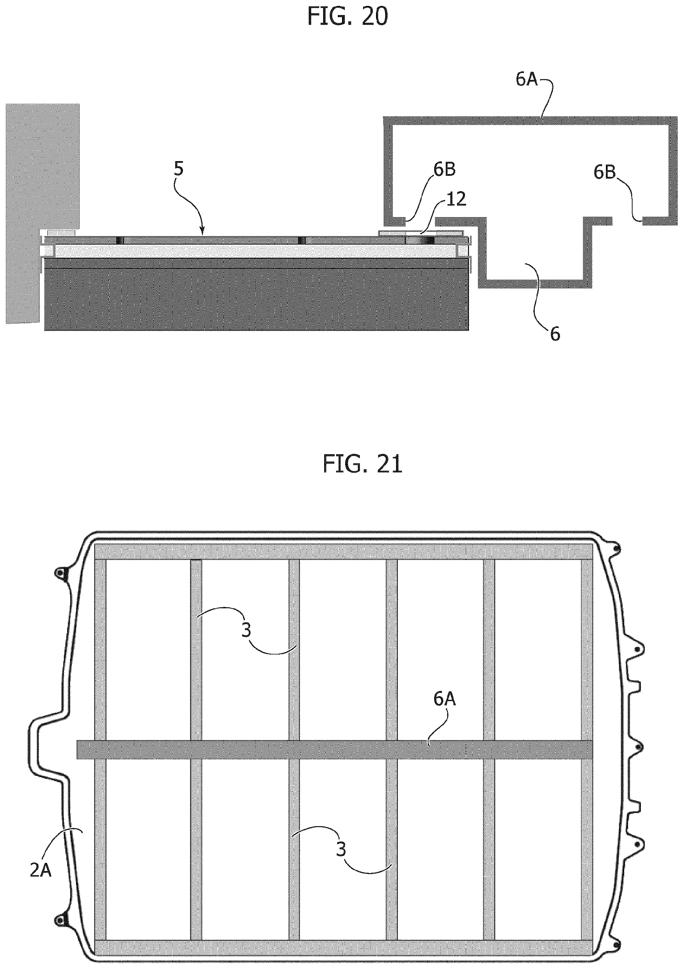

Figure 20 is a partial cross-sectional view of a detail of the battery pack according to the invention, with reference to the solution of Figure 19,
Figure 21 is a plan view of the lower support structure of the battery pack, with reference to a further embodiment,

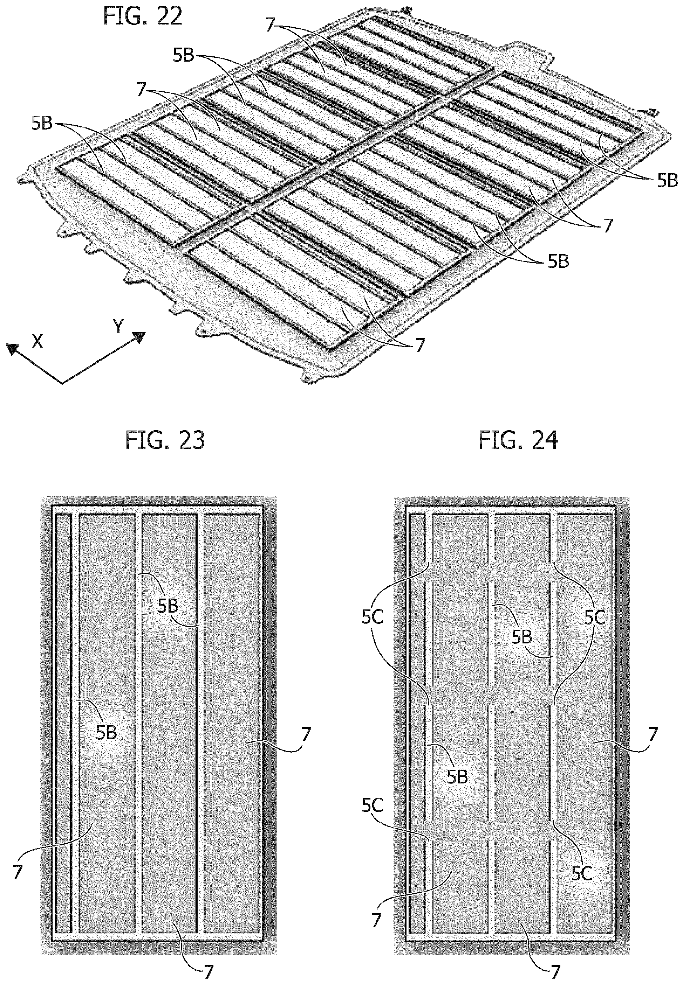

Figure 22 is a perspective view of the lower support structure of the battery pack, with reference to the solution of Figure 21,
Figures 23 and 24 show two alternative solutions with reference to a detail of the structure of Figure 22,

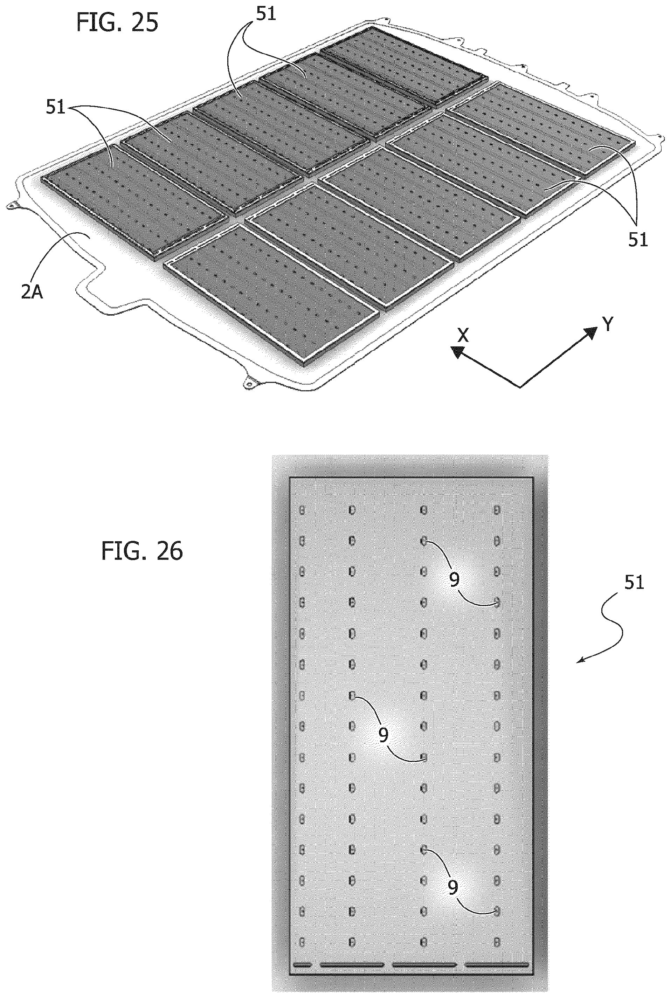

Figure 25 illustrates the structure of Figure 22, completed with upper plates of the lower support structure of the cells,
Figure 26 is a plan view of one of the plates of Figure 25,

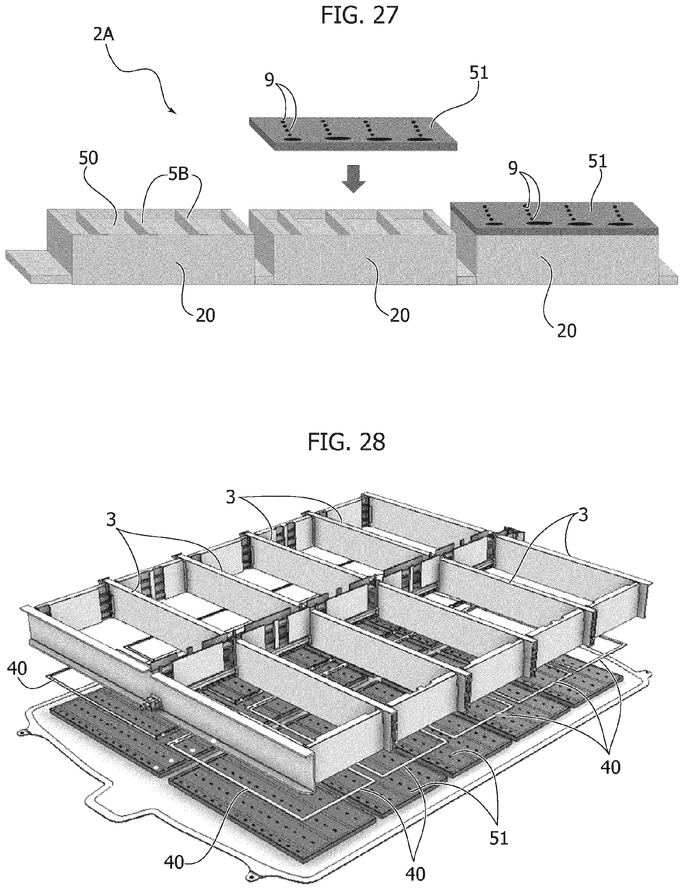

Figure 27 is a further schematic perspective view showing the solution of Figures 21-26, and
Figure 28 is an exploded perspective view of the lower support structure of Figures 21 and 26 and the internal frame of the battery pack.

Figures 1-14 of the attached drawings, relating to solutions previously studied by the Applicant, have been described above.

In the battery pack according to the invention, the general configuration of the battery pack may be of the same type already illustrated in Figures 1-14. Therefore, in Figures 15-28, parts common to those illustrated in Figures 1-14 are indicated with the same reference numerals.

Figure 15 shows a variant of Figures 9 and 12 that illustrates the principles underlying the present invention.

In the case of the previously proposed solutions illustrated in Figure 9 and Figure 12, the transverse channels 7 for the temperature-regulating liquid are delimited superiorly by the lower surfaces of the battery cells 4.

With reference to Figure 15, in the case of the invention, the transverse channels 7 for the temperature-regulating liquid have a closed cross-section, defined entirely within a lower support structure 5.

In the example illustrated here, each battery group has its respective lower support structure 5.

The lower support structure 5 includes a lower wall 50 and an upper wall 51 that is parallel to and spaced apart from the lower wall 50 and is joined to it by a plurality of ribs 5B that are parallel to and spaced apart from each other, extending in direction X. Similarly to what has already been described, in this example, the lower support structure 5 has longitudinal feet 5A resting on the lower wall 2A of the container 2 of the battery pack 1.

Therefore, in the case of the present invention, the battery cells 4 rest on the upper wall 51 of the lower support structure 5. The narrow apertures 9 are formed in the upper wall 51 of the lower support structure 5. A distribution of apertures 9 is provided along the longitudinal direction X, corresponding to each transverse channel 7. In the case of the invention, therefore, the spacer frames 8 have only the function of keeping the cells spaced apart from each other.

As also visible in Figure 15, a transverse channel 7^{I} with a respective narrow opening 9 is arranged to supply the temperature-regulating liquid to a chamber 10 containing the tabs P, N of the various cells 4.

As is evident, the configuration of the lower support structure 5 according to the invention is significantly more rigid than that of the previously studied solutions illustrated in Figures 1-14. Therefore, even in the case of overpressures in the flow of the temperature-regulating liquid, the upper wall 51, forming part of the support structure 5, is not subject to bowing, which avoids the risk of loss of contact with the lower surfaces of the cells. This prevents leaks of the temperature-regulating liquid, which would compromise reliable control of the flow through the different spaces between the cells. The absence of bowing in the lower support structure 5 also makes it possible to avoid undesirable stresses on the structure of the battery pack and in particular on the external casing of the battery pack.

Figure 16 shows a variant in which the chamber 10 containing the tabs P, N is partially occupied by a filling structure 11, which forces the flow of the temperature-regulating liquid to follow the profile of the cells and the tabs P, N.

Figures 17 and 18 refer to a first embodiment, in which each lower support structure 5 is formed in one piece (for example, of metal or polymeric or composite material obtained by extrusion) that incorporates the lower wall 50, the upper wall 51, the ribs 5B, and the longitudinal feet 5A.

With reference to Figure 18, the apertures 9 are preferably in the form of slots elongated in direction X, so as to prevent each of these apertures from being completely obstructed by a cell resting above it due to misalignment in the positioning of the cell allowed by manufacturing tolerances.

Figures 17 and 18 refer to the case where the channels 7 defined within the lower support structure 5 are open at one end, to communicate with the longitudinal feeding channel 6 for the temperature-regulating liquid, similarly to what is illustrated in Figure 8 for the solution previously studied by the Applicant.

Figure 19 illustrates a variant in which each transverse channel 7 is obstructed at the end but communicates with the longitudinal feeding channel 6 via openings 12 formed in the upper wall 51. The openings 12 are in communication with the longitudinal feeding channel 6, as the latter is defined by a conduit with a T-shaped cross-section, indicated as 6A in Figure 20. The conduit 6A has portions partially overlapping the lower support structure 5, with openings 6B for communication with the openings 12.

According to a different embodiment, the lower support structure 5, instead of having the monolithic configuration illustrated in Figures 17 and 19, may consist of two separate elements, rigidly connected to each other: a lower element, comprising the lower wall 50, the ribs 5B, and the feet 5A, and an upper wall 51, bearing the apertures 9 and rigidly connected (for example, by gluing or welding) to the underlying element.

According to a variant of this further embodiment, the lower part of the support structure 5, including the wall 50 and the ribs 5B, may be formed in one piece with the bottom wall 2A of the external casing 2 of the battery pack 1. This solution is schematically illustrated in Figure 27, which shows the bottom wall 2A of the external casing of the battery pack, including blocks 20 each incorporating a wall 50 with respective ribs 5B, above which a respective upper plate 51 (Figure 27 shows only one of the plates 51) bearing the apertures 9 is fixed.

Figure 21 refers to this solution and shows the plan view of the bottom wall of the battery pack casing. The frame with the partition walls 3 is placed on the bottom wall 2A, as well as the conduit 6A defining the longitudinal channel for supplying the temperature-regulating liquid.

As visible in Figure 22, the ribs 5B may be formed in one piece with the wall 2A, corresponding to each group of battery cells.

As visible in Figure 23, the ribs 5B may be continuous or may have interruptions 5C that allow communication between different transverse channels 7.

As visible in Figure 25, for each battery group, a respective upper plate 51 is provided, which is rigidly connected above the ribs 5B so as to delimit the transverse channels 7 from above. Each upper plate 51 bears the apertures 9, preferably in the form of slots, distributed along direction X, corresponding to each transverse channel 7 (see also Figure 26).

Figure 28 illustrates an exploded perspective view of the lower structure of Figure 25, with the frame including the partition walls 3 placed above the plates 51, and with the interposition of respective sealing gaskets 40.

As is evident from the preceding description, the invention makes it possible to effectively solve the problem of homogeneous thermal regulation of the different cells in the battery group. The battery cells rest on a relatively rigid lower support structure. The temperature-regulating liquid reaches the spaces between the battery cells after flowing through transverse channels with a closed cross-section, defined within the lower support structure 5, and also passing through the narrow apertures 9, which are also defined in the lower support structure 5. Thanks to the relatively rigid configuration of the lower support structure 5, the risk of undesirable deformations and consequent leaks of the temperature-regulating liquid is significantly reduced, if not completely eliminated, ensuring that homogeneous flow control is always maintained through the different spaces between the battery cells.

The structure of the battery pack according to the invention is also relatively simple and economical to construct.

Naturally, without departing from the principle of the invention, the construction details and embodiments may vary widely with respect to what has been described and illustrated without thereby departing from the scope of the present invention, as defined in the attached claims.

## Claims

1. Electric battery pack, comprising:
- a plurality of electric battery groups,
- wherein each electric battery group comprises a plurality of battery cells (4) arranged side by side along a first horizontal direction (X) and held spaced apart from each other by respective spacer frames (8),
- wherein the different groups of battery cells (4) are arranged along at least one row, in a second horizontal direction (Y) orthogonal to the first horizontal direction (X),
- wherein the battery pack (1) is configured to receive a flow of a temperature-regulating liquid through the battery pack (1), which liquid comes in direct contact with the battery cells (4),
- wherein the battery pack (1) includes a distribution system of the temperature-regulating liquid within the battery pack (1), the distribution system including:
- a longitudinal feeding channel (6) for feeding the temperature-regulating liquid, extending along said second horizontal direction (Y),
- a plurality of channels (7) transverse to the feeding channel (6), which are in communication with the feeding channel (6) and which extend below each group of battery cells (4) along said first horizontal direction (X),
- wherein each transverse channel (7) communicates with the spaces between the battery cells (4) that are arranged above said transverse channels (7) through a plurality of relatively narrow apertures (9) distributed along said first horizontal direction (X) and configured to provide sufficient resistance to the flow of the temperature-regulating liquid to prevent a tendency for the temperature-regulating liquid to flow to a greater extent into the spaces between the battery cells that are closer to the feeding channel (6),
- wherein the transverse channels (7) are defined by a lower support structure (5) on which the battery cells (4) of the different groups of battery cells are supported,
**characterised in that** the lower support structure (5) defining said transverse channels (7) includes:
- a lower wall (50) resting above, or formed in one piece with, a bottom wall (2A) of a casing (2) of the battery pack (1),
- an upper wall (51) formed in one piece with, or rigidly connected to, said lower wall (50), and
- a plurality of inner ribs (5B) parallel to and spaced apart from each other, extending along the first horizontal direction (X) between the lower wall (50) and the upper wall (51),
so that each transverse channel (7) has a closed cross-section defined by said lower wall (50), said upper wall (51) and two of said inner ribs (5B) of the lower support structure (5).

2. Battery pack according to claim 1, **characterized in that** said relatively narrow apertures (9) are formed in said upper wall (51) of said lower support structure (5) and are aligned along a number of rows parallel to said first horizontal direction (X), each row of apertures (9) being in communication with a respective transverse channel (7).

3. Battery pack according to claim 1, **characterized in that** each group of battery cells (4) is provided with a respective lower support structure (5).

4. Battery pack according to claim 1, **characterized in that** the transverse channels (7) have an open end communicating with the longitudinal feeding channel (6) which feeds the temperature-regulating liquid.

5. Battery pack according to claim 1, **characterized in that** the transverse channels (7) communicate with the longitudinal feeding channel (6) of the temperature-regulating liquid in the vicinity of one end of the transverse channels (7) via passages (12) formed in said upper wall (51) of the lower support structure (5).

6. Battery pack according to claim 2, **characterized in that** the relatively narrow apertures (9) formed in said upper wall (51) are slots extending along said first horizontal direction (X).

## Patentansprüche

1. Elektrisches Batteriepack, umfassend:
- eine Vielzahl von elektrischen Batteriegruppen,
- wobei jede elektrische Batteriegruppe eine Vielzahl von Batteriezellen (4) umfasst, die entlang einer ersten horizontalen Richtung (X) Seite an Seite angeordnet und durch jeweilige Abstandsrahmen (8) voneinander beabstandet gehalten werden,
- wobei die verschiedenen Gruppen von Batteriezellen (4) entlang mindestens einer Reihe in einer zweiten horizontalen Richtung (Y) orthogonal zur ersten horizontalen Richtung (X) angeordnet sind,
- wobei das Batteriepack (1) konfiguriert ist, um einen Strom einer temperaturregelnden Flüssigkeit durch das Batteriepack (1) aufzunehmen, wobei die Flüssigkeit in direkten Kontakt mit den Batteriezellen (4) kommt,
- wobei das Batteriepack (1) ein Verteilungssystem der temperaturregelnden Flüssigkeit innerhalb des Batteriepacks (1) einschließt, wobei das Verteilungssystem umfasst:
- einen longitudinalen Zufuhrkanal (6) zum Zuführen der temperaturregelnden Flüssigkeit, der sich entlang der besagten zweiten horizontalen Richtung (Y) erstreckt,
- eine Vielzahl von Kanälen (7) quer zum Zufuhrkanal (6), die mit dem Zufuhrkanal (6) in Verbindung stehen und sich unterhalb jeder Gruppe von Batteriezellen (4) entlang der besagten ersten horizontalen Richtung (X) erstrecken,
- wobei jeder Querkanal (7) mit den Zwischenräumen zwischen den Batteriezellen (4), die über den besagten Querkanälen (7) angeordnet sind, durch eine Vielzahl von relativ engen Öffnungen (9) in Verbindung steht, die entlang der besagten ersten horizontalen Richtung (X) verteilt und konfiguriert sind, um einen ausreichenden Widerstand gegen den Strom der temperaturregelnden Flüssigkeit bereitzustellen, um eine Tendenz der temperaturregelnden Flüssigkeit zu verhindern, in größerem Umfang in die Zwischenräume zwischen den Batteriezellen zu fließen, die näher am Zufuhrkanal (6) liegen,
- wobei die Querkanäle (7) durch eine untere Trägerstruktur (5) definiert sind, auf der die Batteriezellen (4) der verschiedenen Gruppen von Batteriezellen getragen werden,
**dadurch gekennzeichnet, dass** die untere Trägerstruktur (5), die die besagten Querkanäle (7) definiert, einschließt:
- eine untere Wand (50), die über einer Bodenwand (2A) eines Gehäuses (2) des Batteriepacks (1) ruht oder einstückig damit ausgebildet ist,
- eine obere Wand (51), die einstückig mit der besagten unteren Wand (50) ausgebildet oder starr damit verbunden ist, und
- eine Vielzahl von inneren Rippen (5B), die parallel zueinander und voneinander beabstandet sind und sich entlang der ersten horizontalen Richtung (X) zwischen der unteren Wand (50) und der oberen Wand (51) erstrecken,
so dass jeder Querkanal (7) einen geschlossenen Querschnitt aufweist, der durch die besagte untere Wand (50), die besagte obere Wand (51) und zwei der besagten inneren Rippen (5B) der unteren Trägerstruktur (5) definiert ist.

2. Batteriepack nach Anspruch 1, **dadurch gekennzeichnet, dass** die besagten relativ engen Öffnungen (9) in der besagten oberen Wand (51) der besagten unteren Trägerstruktur (5) ausgebildet und entlang einer Anzahl von Reihen parallel zur besagten ersten horizontalen Richtung (X) ausgerichtet sind, wobei jede Reihe von Öffnungen (9) mit einem jeweiligen Querkanal (7) in Verbindung steht.

3. Batteriepack nach Anspruch 1, **dadurch gekennzeichnet, dass** jede Gruppe von Batteriezellen (4) mit einer jeweiligen unteren Trägerstruktur (5) versehen ist.

4. Batteriepack nach Anspruch 1, **dadurch gekennzeichnet, dass** die Querkanäle (7) ein offenes Ende aufweisen, das mit dem longitudinalen Zufuhrkanal (6) in Verbindung steht, der die temperaturregelnde Flüssigkeit zuführt.

5. Batteriepack nach Anspruch 1, **dadurch gekennzeichnet, dass** die Querkanäle (7) mit dem longitudinalen Zufuhrkanal (6) der temperaturregelnden Flüssigkeit in der Nähe eines Endes der Querkanäle (7) über Durchgänge (12) in Verbindung stehen, die in der besagten oberen Wand (51) der unteren Trägerstruktur (5) ausgebildet sind.

6. Batteriepack nach Anspruch 2, **dadurch gekennzeichnet, dass** die in der besagten oberen Wand (51) ausgebildeten relativ engen Öffnungen (9) Schlitze sind, die sich entlang der besagten ersten horizontalen Richtung (X) erstrecken.

## Revendications

1. Batterie électrique, comprenant :
- une pluralité de groupes de batteries électriques,
- dans lequel chaque groupe de batteries électriques comprend une pluralité de cellules de batterie (4) disposées côte à côte le long d'une première direction horizontale (X) et maintenues espacées les unes des autres par des cadres d'espacement (8) respectifs,
- dans lequel les différents groupes de cellules de batterie (4) sont disposés le long d'au moins une rangée, dans une seconde direction horizontale (Y) orthogonale à la première direction horizontale (X),
- dans lequel le bloc-batterie (1) est configuré pour recevoir un flux d'un liquide de régulation de température à travers le bloc-batterie (1), lequel liquide entre en contact direct avec les cellules de batterie (4),
- dans lequel le bloc-batterie (1) inclut un système de distribution du liquide de régulation de température à l'intérieur du bloc-batterie (1), le système de distribution incluant :
- un canal d'alimentation longitudinal (6) pour alimenter le liquide de régulation de température, s'étendant le long de ladite seconde direction horizontale (Y),
- une pluralité de canaux (7) transversaux au canal d'alimentation (6), qui sont en communication avec le canal d'alimentation (6) et qui s'étendent au-dessous de chaque groupe de cellules de batterie (4) le long de ladite première direction horizontale (X),
- dans lequel chaque canal transversal (7) communique avec les espaces entre les cellules de batterie (4) qui sont disposées au-dessus desdits canaux transversaux (7) par l'intermédiaire d'une pluralité d'ouvertures relativement étroites (9) réparties le long de ladite première direction horizontale (X) et configurées pour fournir une résistance suffisante au flux du liquide de régulation de température pour empêcher une tendance du liquide de régulation de température à s'écouler dans une plus grande mesure dans les espaces entre les cellules de batterie qui sont plus proches du canal d'alimentation (6),
- dans lequel les canaux transversaux (7) sont définis par une structure de support inférieure (5) sur laquelle les cellules de batterie (4) des différents groupes de cellules de batterie sont supportées,
**caractérisé en ce que** la structure de support inférieure (5) définissant lesdits canaux transversaux (7) inclut :
- une paroi inférieure (50) reposant au-dessus, ou formée d'une seule pièce avec, une paroi de fond (2A) d'un boîtier (2) du bloc-batterie (1),
- une paroi supérieure (51) formée d'une seule pièce avec, ou reliée rigidement à, ladite paroi inférieure (50), et
- une pluralité de nervures internes (5B) parallèles et espacées les unes des autres, s'étendant le long de la première direction horizontale (X) entre la paroi inférieure (50) et la paroi supérieure (51),
de sorte que chaque canal transversal (7) présente une section transversale fermée définie par ladite paroi inférieure (50), ladite paroi supérieure (51) et deux desdites nervures internes (5B) de la structure de support inférieure (5).

2. Bloc-batterie selon la revendication 1, **caractérisé en ce que** lesdites ouvertures relativement étroites (9) sont formées dans ladite paroi supérieure (51) de ladite structure de support inférieure (5) et sont alignées le long d'un certain nombre de rangées parallèles à ladite première direction horizontale (X), chaque rangée d'ouvertures (9) étant en communication avec un canal transversal (7) respectif.

3. Bloc-batterie selon la revendication 1, **caractérisé en ce que** chaque groupe de cellules de batterie (4) est pourvu d'une structure de support inférieure (5) respective.

4. Bloc-batterie selon la revendication 1, **caractérisé en ce que** les canaux transversaux (7) présentent une extrémité ouverte communiquant avec le canal d'alimentation longitudinal (6) qui alimente le liquide de régulation de température.

5. Bloc-batterie selon la revendication 1, **caractérisé en ce que** les canaux transversaux (7) communiquent avec le canal d'alimentation longitudinal (6) du liquide de régulation de température au voisinage d'une extrémité des canaux transversaux (7) par l'intermédiaire de passages (12) formés dans ladite paroi supérieure (51) de la structure de support inférieure (5).

6. Bloc-batterie selon la revendication 2, **caractérisé en ce que** les ouvertures relativement étroites (9) formées dans ladite paroi supérieure (51) sont des fentes s'étendant le long de ladite première direction horizontale (X).
